# EUROPÄISCHE PATENTSCHRIFT

(11) **EP 2 944 903 B1**
(45) Veröffentlichungstag und Bekanntmachung des Hinweises auf die Patenterteilung: **01.04.2020**
(21) Anmeldenummer: 14001672.6
(22) Anmeldetag: 13.05.2014
(51) Int. Cl.: F27B 9/02, F27B 9/22, F27B 9/26, F27B 17/00

(54) **Ofen zum Brennen von keramischen Formlingen**
Kiln for the firing of ceramic blanks
Four de brûlage d'ébauches en céramique

(43) Veröffentlichungstag der Anmeldung: 18.11.2015
(73) Patentinhaber: Keller HCW GmbH, 49479 Ibbenbüren-Laggenbeck (DE)
(72) Erfinder: Heiner Gausmann, 49205 Hasbergen (DE); Peter Heitmann, 48612 Horstmar (DE); Rainer Hüsing, 48480 Spelle (DE)
(74) Vertreter: Pott, Ulrich

(56) Entgegenhaltungen:
- WO-A1-01/71265
- DE-A1- 3 042 708
- GB-A- 228 383
- US-A- 1 522 166
- US-A- 1 653 174
- US-A- 1 658 332
- US-A- 1 720 550
- US-A- 2 320 172

## Beschreibung

Die Erfindung bezieht sich auf einen Ofen zum Brennen von keramischen Formlingen, insbesondere von Ziegeln mit einer Mehrzahl von parallel zueinander und entlang einer längs verlaufenden Ofenstrecke bewegbaren, mehrere Ofenwagen umfassenden Zügen, auf denen die Formlinge anzuordnen sind, wobei die Ofenstrecke eine Brennzone zur Erhitzung der Formlinge aufweist und wobei nebeneinander angeordnete Züge in entgegengesetzte Richtungen bewegbar sind ohne eine Richtungsumkehr durch eine Brennzone, wobei zumindest ein Lüfter vorgesehen ist.

Ein Ofen dieser Art ist aus der DE 10 2011 112 838 A1 bekannt. Bei diesem Ofen erfolgt die Bestückung des Ofens auf der einen Seite der Ofenstrecke, während auf der gegenüberliegenden anderen Seite der Ofenstrecke eine Bestückung der jeweiligen Züge mit Formlingen für einen Transport durch den Ofen entlang der Ofenstrecke in die entgegengesetzte Richtung erfolgt. Dabei findet in den jeweiligen Zügen keine Richtungsumkehr statt, so dass sich die Formlinge auf ihren jeweiligen Ofenzügen durch die Brennzone hindurch bewegen und jeweils am bezüglich ihrer Bestückung entgegengesetzten Ende der Ofenstrecke dieser entnommen werden. Durch die auf beiden Seiten der Brennzone jeweils aneinander vorbei bewegten Formlinge werden von den bereits die Brennzone verlassenden Formlinge andere als Kaltbesatz aufgeheizt, bevor sie in die Brennzone gelangen. Durch den Verzicht auf eine Richtungsumkehr in der Brennzone wird der zur Verfügung stehende Bauraum des Ofens optimal ausgenutzt. Die Formlinge werden in der Brennzone durch in einer Längsgasse (Haupttunnel) zwischen den Zügen angeordnete Brennelemente erhitzt. Hierdurch kann die verwendete Heizenergie direkt zu den Formlingen gebracht werden, was zu einer erhöhten Effizienz in der Brennzone und mithin zu einem verringerten Energieeinsatz führt. Die Erhitzung der Ziegel oder dergleichen Formlinge kann unmittelbar und gleichmäßig über deren Aufbauhöhe im Besatz verteilt erfolgen.

Aus der DE 30 42 708 A ist ein Tunnelofen zur Wärmebehandlung von Produkten mit zwei parallelen Behandlungskanälen bekannt, durch die hindurch die Produkte in zwei zueinander gegenläufigen Strömen geführt werden, wobei sich die Kanäle in eine Aufheizzone, eine Brennzone und eine Kühlzone unterteilen und wobei die in der Kühlzone jedes Kanals abgegebene Wärme in der Aufheizzone des anderen Kanals nutzbar gemacht wird. Dazu sind Ventilationsmittel vorgesehen, welche im Gegenstrom zu den Produktströmen die Luft aus der Aufheizzone eines jeden Kanals absaugen und in die Kühlzone des anderen Kanals einfördern. Damit lassen sich jedoch nicht mehr als zwei Produktstromzüge behandeln.

Aus der WO 01/71265 A1 ist ein Tunnelofen bekannt, bei dem zwei Produktströme gegenläufig in dem Tunnel geführt sind und wo wiederum Heiz- und Kühlzonen gebildet sind. Hier wird durch eine Querzirkulation quer zur Förderrichtung der Produktströme die Luft umgewälzt. Damit lassen sich auch nicht mehr als zwei Produktströme in dem Tunnelofen behandeln. Ähnliche Tunnelöfen sind aus jedem von US 1 720 550, US-1 658 332 oder US 1 653 174 bekannt.

Es ist Aufgabe der vorliegenden Erfindung, einen Ofen der eingangs genannten Art weiter zu optimieren.

Zur Lösung dieser Aufgabe zeichnet sich der Ofen der eingangs genannten Art durch die im Patentanspruch 1 angegebenen Merkmale aus. Hinsichtlich vorteilhafter Ausgestaltung wird auf die Ansprüche 2 bis 10 verwiesen.

Dieser gattungsgemäße Ofen hat gegenüber herkömmlichen anderen Öfen erhebliche Vorteile, soll jedoch weiter verbessert werden.

Es ist daher Aufgabe der vorliegenden Erfindung, einen Ofen der eingangs genannten Art weiter zu optimieren.

Zur Lösung dieser Aufgabe zeichnet sich der Ofen der eingangs genannten Art dadurch aus, dass eine einen Zug seitliche begrenzende Ofenwand über eine Heizvorrichtung beheizbar ist und die gegenüberliegende, einen Zug seitliche begrenzende Ofenwand über eine Kühlvorrichtung kühlbar ist.

Damit ist ein Ofen zur Verfügung gestellt, bei dem die jeweilige die Züge seitlich begrenzenden Ofenwände je nach dem, ob der Zug, der dieser Ofenwand während ihres Transportes durch die Ofenstrecke benachbart ist, einen kalten Besatz an Formlingen trägt oder einen heißen Besatz an Formlingen über die Heizvorrichtung beheizt werden kann oder bei einem heißen Besatz an Formlingen zu kühlen ist.

Damit kann über die jeweilige Heizvorrichtung bzw. über die jeweilige Kühlvorrichtung das Temperaturgefälle wesentlich verbessert werden zu dem jeweiligen Formling, so dass die seitlich die Züge begrenzende Ofenwände als Wandtemperaturspeicher oder aber auch als Kühltemperaturspeicher dienen und mithin auf die Züge an Formlingen einwirken können, die jeweils in der Querreihe keine direkten Nachbarn haben, um dort hin Wärme abzugeben bzw. Wärme aufzugeben.

Die Heizvorrichtung ist bevorzugterweise als Heißluftvorrichtung ausgebildet, und die Kühlvorrichtung kann ebenfalls als Kühlluftvorrichtung ausgebildet sein. Es sind selbstverständlich auch Heizstäbe als Heizvorrichtungen möglich. Des Weiteren können auch andere Kühlaggregate zum Einsatz kommen. Ebenfalls ist es möglich, die entsprechenden Ofenwände direkt durch entsprechende Heizschlangen oder Kühlschlangen direkt zu temperieren.

Weitere vorteilhafte Ausgestaltungen ergeben sich aus weiteren Unteransprüchen, der nachfolgenden Beschreibung und der Zeichnung. In der Zeichnung zeigen:
- Fig. 1: in einer schematischen Querschnittsdarstellung ein Ausführungsbeispiel eines Ofens nach der Erfindung (gemäß Schnittlinie A-A) in Fig. 2,
- Fig. 2: eine Draufsicht auf den Ofen gemäß dem Ausführungsbeispiel nach Fig. 1.

In der Zeichnung sind grundsätzlich übereinstimmende Teile mit übereinstimmenden Bezugsziffern versehen.

Allgemein mit 1 ist der Ofen beziffert, der eine Ofenstrecke 2 aufweist mit einer Brennzone, einem Umwälzkanal 3 und Kühl- und Aufwärmzonen. In dem Ofen 1 sind in den Ausführungsbeispielen insgesamt zwölf Züge 4, 5 dargestellt, wobei jeweils ein Zug 4 in eine Richtung in die Zeichnungsebene hinein bewegt wird und der Zug 5 in entgegengesetzte Richtung, also aus der Zeichnungsebene heraus bewegt wird.

Ein Zug 4, der mit Formlingen 6 bestückt ist, genauso wie der Zug 5, kann einen kalten Besatz haben, wogegen der Zug 5 einen warmen, also schon gebrannten Besatz an Formlingen 6 hat, so dass jeweils abwechselnd nebeneinander kalte und warme Züge 4, 5 transportiert werden mit Ausnahme des ersten Zuges ganz links in den Zeichnungsblättern und dem rechten letzten Zug, wobei der erste Zug 4 einen kalten Besatz hat und der letzte rechte Besatz einen warmen Besatz hat. Der warme Besatz kann daher nur an der rechten Außenseite seine Wärme an den links benachbarten Besatz dieses Zuges abgeben kann, der wiederum ein kalter Besatz ist. In dem gezeigten Ausführungsbeispiel kann dieser Zug seine Wärme an die Luft 8 abgeben, die von dem Lüfter 9, der in dem gezeigten Ausführungsbeispiel ein Radialverdichter ist, angesaugt wird, so dass über den Radialventilator 9 eine Zwangskonvektion innerhalb des Ofens und entlang der Ofenstrecke stattfindet.

Unterhalb des Umwälzkanals 3 ist eine Wandung 10 vorgesehen, an der Luftleitvorrichtungen 11 vorgesehen sind, die verhindern, dass Luft 8 unter Umgehung der Formlinge 6 an der Wandung 10 entlanggefördert wird.

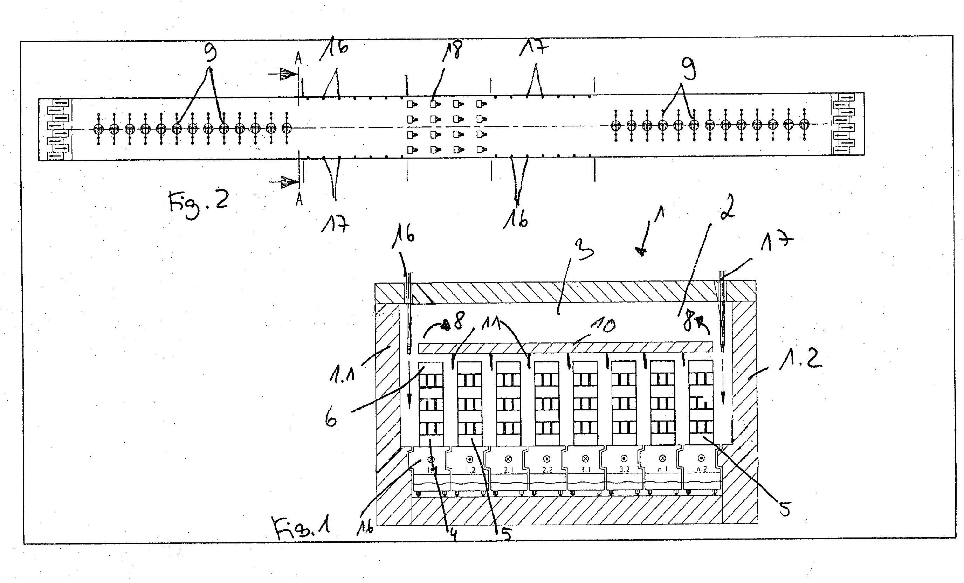

Wie im Einzelnen näher Fig. 1 zu entnehmen ist, ist zur Beheizung der seitlichen Ofenwand 1.1 eine Heizvorrichtung 16 vorgesehen und zum Kühlen der seitlichen Ofenwand 1.2 eine Kühlvorrichtung 17. Die Heizvorrichtung 16 ist in Transportrichtung der jeweiligen Züge den Brennern 18 der Brennzone vorgeordnet und die Kühlvorrichtung 17 den Brennern 18 der Brennzone nachgeordnet. Somit ist die Heizvorrichtung 16 dem kalten Besatz des Zuges 4 benachbart und die Kühlvorrichtung 17 dem heißen Besatz von Formlingen 6 des in der Fig. 1 rechten Zuges. Über die Ventilatoren kann eine Zwangskonvektion durchgeführt werden.

## Patentansprüche

1. Ofen zum Brennen von keramischen Formlingen, insbesondere von Ziegeln mit einer Mehrzahl von parallel zueinander und entlang einer längs verlaufenden Ofenstrecke bewegbaren, mehrere Ofenwagen umfassenden Zügen, auf denen die Formlinge anzuordnen sind, wobei die Ofenstrecke eine Brennzone zur Erhitzung der Formlinge aufweist, wobei nebeneinander angeordnete Züge in entgegengesetzte Richtungen ohne eine Richtungsumkehr durch die Brennzone bewegbar sind, und wobei zumindest ein Lüfter zur Luftumwälzung vorgesehen ist, wobei eine einen Zug (4, 5) seitlich begrenzende Ofenwand (1.1) über eine Heizvorrichtung (16) beheizbar ist und die gegenüberliegende, einen Zug (4, 5) seitlich begrenzende Ofenwand (1.2) über eine Kühlvorrichtung (17) kühlbar ist, **dadurch gekennzeichnet, dass** in Wandabschnitten der jeweiligen Ofenwand (1.1, 1.2) mehrere Heizvorrichtungen (16) und mehrere Kühlvorrichtungen (17) mit Abstand zueinander derart vorgesehen sind, dass in einer Ofenwand (1.1, 1.2) vor der Brennzone mehrere Heizvorrichtungen (16) und nach der Brennzone mehrere Kühlvorrichtungen (17) vorgesehen sind.

2. Ofen nach Anspruch 1 **dadurch gekennzeichnet, dass** die Heizvorrichtung (16) als Heißluftvorrichtung ausgebildet ist.

3. Ofen nach einem der Ansprüche 1 bis 2 **dadurch gekennzeichnet, dass** die Kühlvorrichtung (17) als Kühlluftvorrichtung ausgebildet ist.

4. Ofen nach einem der Ansprüche 1 bis 3 **dadurch gekennzeichnet, dass** oberhalb der Formlinge (6) eine Wandung vorgesehen ist mit einer Öffnung, in der ein Axialventilator und/oder ein Radialventilator als Lüfter vorgesehen ist (sind).

5. Ofen nach Anspruch 4 **dadurch gekennzeichnet, dass** oberhalb der Wandung ein Umwälzkanal vorgesehen ist.

6. Ofen nach einem der Ansprüche 1 bis 5 **dadurch gekennzeichnet, dass** in der Ofenstrecke zumindest eine Luftleitvorrichtung vorgesehen ist.

7. Ofen nach einem der Ansprüche 4 oder 5 und 6 **dadurch gekennzeichnet, dass** eine Luftleitvorrichtung unterhalb der Wandung vorgesehen sind.

8. Ofen nach Anspruch 6 oder 7 **dadurch gekennzeichnet, dass** Luftleitvorrichtungen in einen Haupttunnel der Ofenstrecke hineinragen.

9. Ofen nach Anspruch 8 **dadurch gekennzeichnet, dass** mit Abstand zueinander angeordnete Luftleitvorrichtungen unterschiedlich lang ausgebildet sind und unterschiedlich tief in einen Haupttunnel ragen.

10. Ofen nach einem der Ansprüche 1 bis 9 **dadurch gekennzeichnet, dass** der Lüfter in einer Leitung vorgesehen ist, die über gegenüberliegend angeordnete Leitungsanschlüsse mit der Ofenstrecke verbunden ist und über die die Luft derart in den Ofen eingebracht wird, dass sie den Ofen quer zur Ofenstrecke ausgerichtet durchströmt und dem Lüfter zumindest teilweise wieder zugeführt wird.

## Claims

1. Kiln for firing ceramic blanks, in particular bricks, comprising a plurality of trains which comprise a plurality of kiln cars and can be moved in parallel with one another and along a kiln region which extends longitudinally, on which trains the blanks are to be arranged, the kiln region having a firing zone for heating the blanks, it being possible for adjacently arranged trains to be moved through the firing zone in opposite directions without a reversal of direction, and at least one fan being provided for air circulation, it being possible for a kiln wall (1.1) which laterally delimits a train (4, 5) to be heated by means of a heating device (16) and it being possible for the opposite kiln wall (1.2) which laterally delimits a train (4, 5) to be cooled by means of a cooling device (17), **characterised in that** a plurality of heating devices (16) and a plurality of cooling devices (17) are provided at a distance from one another in wall portions of the relevant kiln wall (1.1, 1.2), such that a plurality of heating devices (16) are provided upstream of the firing zone and a plurality of cooling devices (17) are provided downstream of the firing zone in a kiln wall (1.1, 1.2).

2. Kiln according to claim 1, **characterised in that** the heating device (16) is designed as a hot air device.

3. Kiln according to either claim 1 or claim 2, **characterised in that** the cooling device (17) is designed as a cold air device.

4. Kiln according to any of claims 1 to 3, **characterised in that** a wall is provided above the blanks (6) which has an opening in which an axial ventilation means and/or a radial ventilation means is (are) provided as the fan.

5. Kiln according to claim 4, **characterised in that** a circulation channel is provided above the wall.

6. Kiln according to any of claims 1 to 5, **characterised in that** at least one air conducting device is provided in the kiln region.

7. Kiln according to any of claims 4 or 5 and 6, **characterised in that** an air conducting device is provided below the wall.

8. Kiln according to either claim 6 or claim 7, **characterised in that** air conducting devices project into a main tunnel of the kiln region.

9. Kiln according to claim 8, **characterised in that** air conducting devices arranged at a distance from one another are of different lengths and project to different depths into a main tunnel.

10. Kiln according to any of claims 1 to 9, **characterised in that** the fan is provided in a pipe which is connected to the kiln region by means of opposite pipe connections and by means of which the air is introduced into the kiln such that the air flows through the kiln in a manner oriented transversely to the kiln region and is at least partly fed back to the fan.

## Revendications

1. Four destiné à la cuisson de corps moulés en céramique, en particulier des briques, avec une pluralité de trains comprenant plusieurs chariots de four pouvant être déplacés parallèlement les uns aux autres et le long d'un chemin de four longitudinal et sur lesquels sont agencés les corps moulés, dans lequel le chemin de four présente une zone de cuisson destinée au chauffage des corps moulés, dans lequel des trains juxtaposés peuvent être déplacés à travers la zone de cuisson dans des directions opposées sans inversion de direction, et dans lequel au moins un ventilateur est prévu pour une mise en circulation de l'air, dans lequel une paroi de four (1.1) délimitant latéralement un train (4, 5) peut être chauffée par l'intermédiaire d'un dispositif de chauffage (16) et la paroi de four (1.2) opposée délimitant latéralement un train (4, 5) peut être refroidie par l'intermédiaire d'un dispositif de refroidissement (17), **caractérisé en ce que**, dans des sections de paroi de la paroi de four (1.1, 1.2) respective, plusieurs dispositifs de chauffage (16) et plusieurs dispositifs de refroidissement (17) sont prévus avec un espacement les uns par rapport aux autres de telle manière que, dans une paroi de four (1.1, 1.2), plusieurs dispositifs de chauffage (16) sont prévus avant la zone de cuisson et plusieurs dispositifs de refroidissement (17) sont prévus après la zone de cuisson.

2. Four selon la revendication 1, **caractérisé en ce que** le dispositif de chauffage (16) est réalisé sous forme d'appareil à air chaud.

3. Four selon l'une quelconque des revendications 1 à 2, **caractérisé en ce que** le dispositif de refroidissement (17) est réalisé sous forme de dispositif à air de refroidissement.

4. Four selon l'une quelconque des revendications 1 à 3, **caractérisé en ce que**, au-dessus des corps moulés (6), une paroi est munie d'une ouverture dans laquelle un ventilateur axial et/ou un ventilateur radial fait (font) office de ventilateur.

5. Four selon la revendication 4, **caractérisé en ce qu'**un canal de mise en circulation est prévu au-dessus de la paroi.

6. Four selon l'une quelconque des revendications 1 à 5, **caractérisé en ce qu'**au moins un dispositif de guidage d'air est prévu dans le chemin de four.

7. Four selon l'une quelconque des revendications 4 ou 5 et 6, **caractérisé en ce qu'**un dispositif de guidage d'air est prévu sous la paroi.

8. Four selon la revendication 6 ou 7, **caractérisé en ce que** des dispositifs de guidage d'air font saillie dans un tunnel principal du chemin de four.

9. Four selon la revendication 8, **caractérisé en ce que** des dispositifs de guidage d'air agencés avec un espacement les uns par rapport aux autres sont réalisés dans des longueurs différentes et font saillie dans un tunnel principal à des profondeurs différentes.

10. Four selon l'une quelconque des revendications 1 à 9, **caractérisé en ce que** le ventilateur est prévu au sein d'une conduite qui est reliée au chemin de four par l'intermédiaire de raccords de conduite agencés en face les uns des autres et par l'intermédiaire desquels l'air est introduit dans le four de telle manière qu'il parcourt le four en étant orienté transversalement par rapport au chemin de four et est renvoyé au moins partiellement vers le ventilateur.
